# EUROPÄISCHE PATENTSCHRIFT

(11) **EP 0 721 572 B1**
(45) Veröffentlichungstag und Bekanntmachung des Hinweises auf die Patenterteilung: **19.05.1999**
(21) Anmeldenummer: 94928284.2
(22) Anmeldetag: 01.10.1994
(51) Int. Cl.: G01F 1/66, G01F 1/74, G01F 1/32, G01F 1/712

(54) **VERFAHREN ZUR MINIMIERUNG DES EINFLUSSES VON RESONANZFLUKTUATIONEN AUF DAS MESSIGNAL BEI ULTRASCHALL-DURCHSCHALLUNGSUNTERSUCHUNGEN**
METHOD OF MINIMIZING THE EFFECT OF RESONANCE FLUCTUATIONS ON THE MEASUREMENT SIGNAL IN ULTRASONIC TRANSMISSION MEASUREMENTS
PROCEDE PERMETTANT DE MINIMISER L'INFLUENCE DE FLUCTUATIONS DE RESONANCE SUR LE SIGNAL DE MESURE DANS DES MESURES DE TRANSMISSION ULTRASONORES

(30) Priorität: 02.10.1993 DE 4333645
(43) Veröffentlichungstag der Anmeldung: 17.07.1996
(73) Patentinhaber: Forschungszentrum Rossendorf e.V., D-01474 Rossendorf (DE)
(72) Erfinder: PRASSER, Horst-Michael, D-01097 Dresden (DE); SCHÜTZ, Peter, D-01324 Dresden (DE); HENSEL, Frank, D-01099 Dresden (DE)
(86) Internationale Anmeldenummer: DE9401160
(87) Internationale Veröffentlichungsnummer: WO9510027

(56) Entgegenhaltungen:
- DE-A- 2 133 393
- US-A- 4 265 125
- PATENT ABSTRACTS OF JAPAN vol. 12, no. 390 (P-772) 18. Oktober 1988 & JP,A,63 133 019 (MITSUBISHI ELECTRIC) 4. Juni 1988
- JOURNAL OF PHYSICS E. SCIENTIFIC INSTRUMENTS, Bd.21, Nr.4, April 1988, BRISTOL GB Seiten 406 - 414 L.A.XU ET AL. 'The pulsed ultrasonic cross-correlation flowmeter for two-phase flow measurement' in der Anmeldung erwähnt

## Beschreibung

Aus der Literatur ist eine Reihe von Arbeiten, die sich mit der Verwendung von Ultraschall zur Bestimmung von Parametern einer Rohrströmung beschäftigen, bekannt. Bei der Mehrzahl der Arbeiten für Messungen der Parameter einer Zwei- oder Mehrphasenströmung wurde das ImpulsEcho-Verfahren verwendet Dieses Verfahren bleibt jedoch auf sehr kleine Gasanteile und auf geordnete eindeutige Strömungszustände beschränkt.

Wesentlich bessere Meßergebnisse auch bei größeren Gasanteilen können durch die Anwendung des Durchschallungsverfahrens auf die Zwei- oder Mehrphasenströmung erzielt werden. Dabei werden ein Sender und ein Empfänger gegenüberliegend innen oder außen an die Rohrwand angekoppelt. Grundvoraussetzung zur Erzielung auswertbarer Meßsignale bei der von UltraschallDurchflußmeßverfahren bekannten Anordnung der Prüfköpfe ist der Betrieb der Ultraschall-Meßstrecke in Resonanz. Die Resonanzfrequenzen sind aber bekannterweise von verschiedenen Strömungsparametem (Druck und Temperatur der Fluide, Volumenanteile bei Zwei- und Mehr-phasenströmungen) abhängig. In der Literatur werden verschiedene Methoden beschrieben, die bei Ultraschall-Durchschallungsverfahren die Meßstrecke in Resonanz halten. L.A. Xu beschreibt in "The pulsed ultrasonic cross-correlation flowmeter for two-phase flow measurement" [J. Phys. E (London), Sci. Instrum. (Apr. 1988) v. 21 (4) p. 406-414] die Anregung des Senders durch breitbandige Impulse. Auch im US-Patent Nr. 3.881.352 erfolgt die Signalerregung auf die gleiche Weise. Da durch die Breitbandigkeit mindestens eine Resonanzfrequenz der Meßstrecke mit erzeugt wird, ist eine zufriedenstellende Signalgewinnung gewährleistet. Nachteilig sind aber der nicht unerhebliche technische Aufwand für einen Pulsgenerator und unter Umständen die Suche nach der günstigsten Impulshöhe und -breite. Durch eine geeignete Wahl der Parameter einer Rückkopplungsschleife wird bei der in der Patentschrift DE 2.133.393 beschriebenen Ultraschall-Meßstrecke die Erfordernis einer kontinuierlichen Nachführung der Resonanzfrequenz vermieden. Allerdings hängen diese Parameter von der zu untersuchenden Strömung ab und sind für jeden Einsatzfall stets wieder neu zu ermitteln, so daß ein universeller Einsatz dieser Methode problematisch ist.

Mit der nachfolgend beschriebenen Erfindung soll unter den verschiedensten Strömungsverhältnissen ein optimaler Betrieb einer Ultraschallmeßstrecke, bestehend aus einander gegenüberliegenden Sender und Empfänger im Durchschallungsmodus gewährleistet werden. Aufgabe der vorliegenden Erfindung ist es dabei, die Auswirkungen der infolge dynamischer Änderungen von Strömungsparametern (Temperatur, Druck, Strömungsform usw.) entstehenden zeitlichen Fluktuationen der Resonanzen auf die Signalgewinnung zu minimieren.

Mit der Erfindung wird das Problem der Beeinträchtigung der Messungen durch Resonanzfluktuationen der Strömung durch eine ständige schnelle senderseitige Änderung der Erregerfrequenz (wobbeln) gelöst. Der Sender wird durch eine Sinus-, Rechteck-, Sägezahn- oder Dreieckschwingung erregt. Die Anregungsfrequenz ändert sich dabei in Bruchteilen von Sekunden laufend. Ausgehend von einer Startfrequenz wird die Erregerfrequenz linear oder logarithmisch bis zu einer Endfrequenz geändert (gewobbelt), um von dort abrupt oder durch umgekehrtes Wobbeln zur Startfrequenz zurückzukehren. Start- und Endfrequenz werden praktisch nur durch den Arbeitsbereich der jeweils verwendeten Ultraschallwandler begrenzt. Durch das Durchfahren dieses großen Frequenzbereiches wird gewährleistet, daß selbst bei sich dynamisch verändernden Strömungsverhältnissen (Ein-, Zwei- oder Mehrphasen- strömungen) eine mehrmalige kurzzeitige Durchschallung im Resonanzbetrieb erfolgt.
Durch die im Rohr ablaufenden Strömungsvorgänge wird der durchgehende Schall beeinflußt, er erfährt eine Amplitudenmodulation. Nach der Rückwandlung in ein elektrisches Signal im Ultraschall-Empfänger werden diejenigen Signale, die im Bereich der Sendefrequenzen liegen, verstärkt, anschließend wird eine Amplitudendemodulation durchgeführt Das so erhaltene Signal passiert danach einen Tiefpaßfilter (höchste Paßfrequenz < Wobbelfrequenz) und steht jetzt der weiteren Meßwertverarbeitung zur Verfügung. Die Amplitude des nun vorliegenden Signales gibt, bedingt durch die Amplitudenmodulation und nachfolgende Glättung, die mittlere Änderung des Signalpegels an allen Resonanzstellen wieder, die jetzt hauptsächlich Abhängigkeiten vom durchschallten Medium aufweist Ein Einfluß von Verschiebungen einzelner Resonanzen wird durch die Mittelung über viele Resonanzstellen vermieden. Eine kontinuierliche Frequenznachführung ist somit nicht mehr erforderlich.

Nachfolgend soll die Erfindung anhand eines Ausführungsbeispieles näher erläutert werden, welches sich auf die Anwendung des erfindungsgemäßen Verfahrens bei der Überwachung einer wässrigen Zweiphasenströmung bezieht. Dabei sei das Auftreten der gasförmigen Phase zu detektieren.

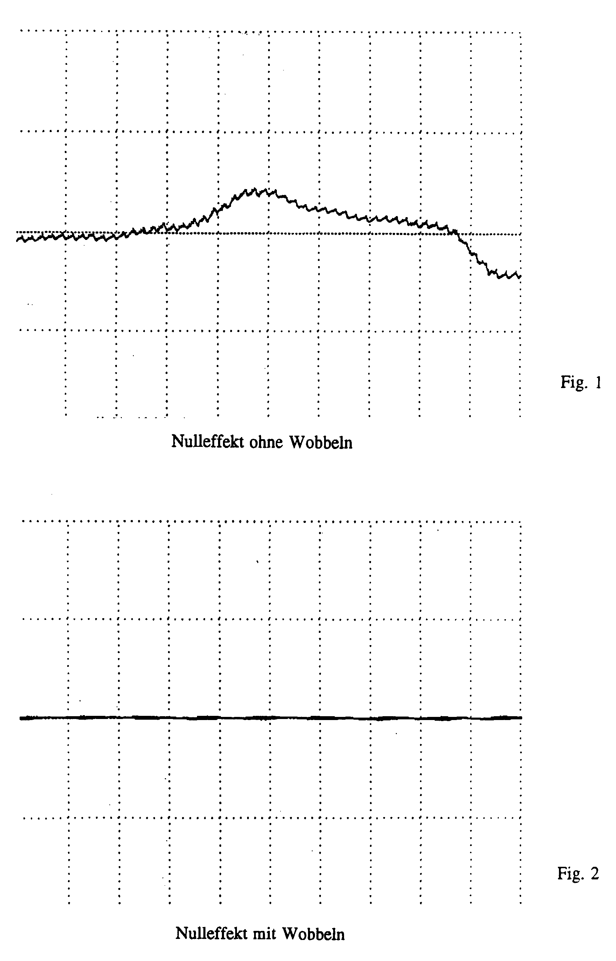

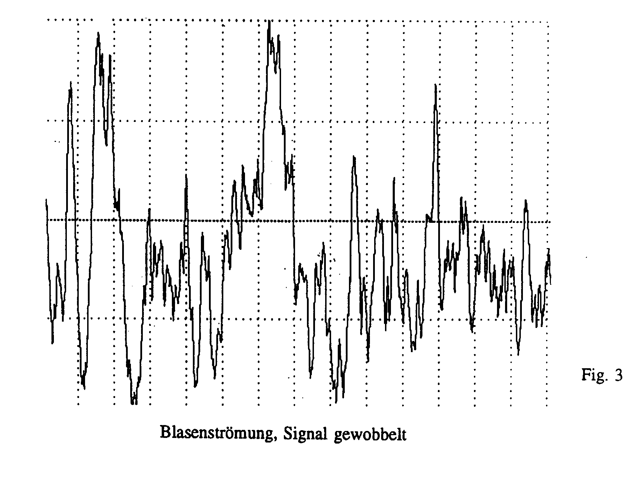

Bei der Einschallung mit konstanter Frequenz treten wie in Fig. 1 dargestellt bereits beim Vorliegen einer ungestörten Einphasen-Wasser-Strömung erhebliche Signalfluktuationen auf, die die Erkennung des Auftretens der gasförmigen Phase stark erschweren bzw. unmöglich machen. Sie werden auf die Verschiebung von akustischen Resonanzen infolge von Temperaturfluktuationen zurückgeführt.
Durch die erfindungsgemäße Wobbelung des einschallenden Ultraschalls mit z.B. 1 kHz Wobbelfrequenz und anschließender Filterung können diese Signalfluktuationen wie in Fig. 2 gezeigt weitgehend unterdrückt werden.
Um im konkreten Anwendungsfall nicht den gesamten zur Verfügung stehenden Frequenzbereich des Ultraschallsenders durchfahren zu müssen, kann durch Beobachtung des Signalverlaufs bei ungestörtem Meßmedium der Wobbelbereich der Erregerfrequenz so lange eingeengt werden, wie die Resonanzfluktuationen unterdrückt bleiben. Im vorliegenden Beispiel ungestörten Wassers innerhalb eines Rohres wurde dieser Bereich mit 280 - 530 kHz als günstig eingegrenzt. Durch eine Tiefpaßfilterung des demodulierten Signals (f_{3dB} = 0,1 kHz) wurde eine Mittelung über den Wobbelbereich erreicht, die den Einfluß der Verschiebung von Resonanzen stark vermindert.

In Fig.2 ist die Modulation des Ultraschalles durch eine blasenhaltige Wasserströmung dargestellt. Durch die erfindungsgemäße Wobbelung des Sendersignales werden die Resonanzfluktuationen minimiert, so daß bei einer Änderung der Blasengröße bzw. -anzahl keine Nachführung der Sendefrequenz mehr erforderlich ist. Damit wird das gewonnene Meßsignal direkt bezüglich der Parameter der Blasenströmung auswertbar. Einzelne Blasen gleicher Größe führen beim Durchgang durch den Ultraschallstrahl stets zur gleichen Modulation, unabhängig von solchen Parametern wwie Systemdruck bzw. -temperatur.

Der Vorteil der Erfindung besteht in der Aufrechterhaltung des optimalen Betriebes der Meßstrecke durch die ständige Gewährleistung des mehrmaligen kurzzeitigen Resonanzbetriebes (mindestens 1000 mal pro Sekunde) der Ultraschallmeßswecke auch bei sich dynamisch ändernden Strömungsparametern bzw. -verhältnissen. Eine Verschiebung der Resonanzfrequenzen durch sich ändernde Strömungsparameter hat deshalb nur einen vernachlässigbar kleinen Einfluß auf das Meßsignal. Eine kontinuierliche Nachführung der Resonanzfrequenz ist nicht mehr erforderlich. Somit ist ein universeller Einsatz für Durchschallungsuntersuchungen für verschiedene Einsatzzwecke (u.a. Ultraschall-Durchflußmeßverfahren, Ermittlung von Parametern von Zwei- und Mehrphasenströmungen) möglich. Für den optimalen Betrieb der Meßswecke werden nur relativ einfache Zusatzgeräte (ein wobbelbarer Funktionsgenerator, ein Amplitudendemodulator und ein Tiefpaßfilter) benötigt.

## Patentansprüche

1. Verfahren zur Minimierung des Einflusses von Resonanzfluktuationen des Meßmediums bei Ultraschall-Durchschallungsuntersuchungen an in Rohrleitungen geführten Zwei- und Mehrphasenströmungen bei denen je ein Sender und ein Empfänger für Ultraschall gegenüberliegend an der Rohrleitung angekoppelt sind und die Strömung bei Resonanzfrequenz durchschallt wird, wobei Einrichtungen zur Beeinflussung der Sendefrequenz vorgesehen sind,
dadurch gekennzeichnet, daß die Frequenz des Ultraschallsenders ständig zwischen einer definierten unteren und oberen Grenzfrequenz variiert (gewobbelt) wird, wobei die Grenzfrequenzen so definiert sind, daß für alle konkret vorkommenden Strömungsverhältnisse die Resonanzfrequenzen eingeschlossen sind, so daß während einer Wobbelperiode mindestens einmal kurzzeitig Resonanzbetrieb erreicht wird, und daß eine die Einflüsse des Wobbelns minimierende, nur die medienabhängigen Meßsignale weiterleitende Filterung des Empfängersignals erfolgt.

2. Verfahren nach Anspruch 1, dadurch gekennzeichnet, daß die Sendefrequenz linear oder logarithmisch variiert wird, daß nach Erreichen der Endfrequenz direkt zur Startfrequenz zurückgekehrt oder aber ein umgekehrtes wobbeln durchgeführt wird.

## Claims

1. Method of minimizing the influence of resonant fluctuations in the measurement medium in ultrasonic transmission measurements of two-phase and multi-phase fluid flows conducted in pipes, during which flows, in each case a transmitter and a receiver for ultrasonic sound being coupled, one opposite the other, to the pipe, and resonant frequency being transmitted through the flow, devices for influencing the transmission frequency being provided,
characterized in that the frequency of the ultrasonic transmitter is varied (wobbled) continuously between a defined lower cut-off frequency and a defined upper cut-off frequency, the cut-off frequencies being defined such that they include the resonant frequencies for all the flow conditions which occur in practice, so that resonant operation is achieved at least once briefly during a wobbling period, and in that filtering of the receiver signal, which minimizes the influences of the wobbling and allows only the fluid-dependent measurement signals to pass, takes place.

2. Method according to Claim 1, characterized in that the transmission frequency is varied linearly or logarithmically, in that, after the final frequency is reached, the device returns directly to the starting frequency or else wobbling is carried out in reverse.

## Revendications

1. Procédé permettant de minimiser l'influence de fluctuations de résonance du milieu de mesure dans des mesures de transmission ultrasonores effectuées sur des écoulements à deux et à plusieurs phases dans des conduites, un émetteur et un récepteur ultrasonores étant accouplés à la conduite en vis-à-vis l'un de l'autre et le signal traversant l'écoulement à la fréquence de résonance, des dispositifs pour agir sur la fréquence d'émission étant prévus,
caractérisé en ce qu'on fait varier en permanence la fréquence de l'émetteur ultrasonore entre une fréquence limite inférieure et une fréquence limite supérieure (wobulation), les fréquences limites étant définies de manière à inclure les fréquences de résonance de toutes les conditions d'écoulement pouvant survenir concrètement, de manière à atteindre, une fois au moins pendant une courte durée, le régime de résonance pendant une période de wobulation, et de manière qu'il en résulte un filtrage du signal du récepteur minimisant les influences de la wobulation et ne propageant que les signaux de mesure dépendant du milieu.

2. Procédé selon la revendication 1, caractérisé en ce qu'on fait varier la fréquence d'émission de manière linéaire ou logarithmique, en ce qu'après avoir atteint la fréquence finale, on retourne directement à la fréquence de départ ou alors on effectue une wobulation inverse.
